Europäisches Patentamt

European Patent Office

Office européen des brevets

(11) Veröffentlichungsnummer: **0 045 878**
**B1**

(12) **EUROPÄISCHE PATENTSCHRIFT**

(45) Veröffentlichungstag der Patentschrift:
**29.01.86**

(51) Int. Cl.⁴: **G 01 N 15/06**

(21) Anmeldenummer: **81105747.0**

(22) Anmeldetag: **21.07.81**

(54) **Anordnung zur Feststellung von Partikeln in einer Gasströmung.**

(30) Priorität: **12.08.80 DE 3030499**

(43) Veröffentlichungstag der Anmeldung:
**17.02.82 Patentblatt 82/7**

(45) Bekanntmachung des Hinweises auf die Patenterteilung:
**29.01.86 Patentblatt 86/5**

(84) Benannte Vertragsstaaten:
**AT BE CH FR GB IT LI LU NL SE**

(56) Entgegenhaltungen:
**DE - A - 2 654 726**
**DE - C - 491 185**
**FR - A - 2 200 961**
**FR - A - 2 244 384**
**US - A - 2 489 286**

(73) Patentinhaber: **Siemens Aktiengesellschaft, Berlin und München Wittelsbacherplatz 2, D-8000 München 2 (DE)**

(72) Erfinder: **Winter, Hans, Dipl.-Ing., Wendel-Dietrich-Strasse 8, D-8000 München 19 (DE)**

ACTORUM AG

**Beschreibung**

Die Erfindung bezieht sich auf eine Anordnung zur Feststellung von Partikeln in einer Gasströmung gemäss dem Oberbegriff des Patentanspruches 1.

Eine derartige Anordnung ist z.B. erforderlich bei nichtmechanischen Schnelldruckern, die nach dem elektrofotografischen Druckprinzip arbeiten. Dort muss der Resttoner, der sich nach dem Umdruck noch auf der Fotoleitertrommel befindet, abgesaugt werden und in einem Papierfilter aufgefangen werden (s. z.B. US-A-3 795 025). Das Filter muss überwacht werden, damit bei einem Defekt der Drucker sofort abgeschaltet wird und kein Toner mit der Abluft in die Umgebung des Druckers gerät.

Es ist somit eine Anordnung erforderlich, mit der festgestellt werden kann, ob in der Gasströmung hinter dem Filter Partikel enthalten sind.

Aus der DE-C-2 654 726 ist eine derartige Anordnung bekannt. Dort wird in der Gasströmung eine Sonde aus einem lichtdurchlässigen Hohlkörper angeordnet. Im Hohlkörper liegt eine Lichtquelle, die den Hohlkörper auf derjenigen Wandseite beleuchtet, auf der die Gasströmung auftrifft und auf der sich dabei in der Gasströmung enthaltene Partikel absetzen. Im Hohlkörper ist weiterhin ein Lichtdetektor angeordnet, auf den das an dieser Wandseite reflektierte Licht auftrifft. Der Lichtdetektor gibt ein der reflektierten Lichtstärke proportionales Signal ab, das weiter ausgewertet werden kann. Ein Nachteil dieser Anordnung besteht darin, dass sie nicht sehr genau ist.

Es ist weiters aus der FR-A-2 244 384 eine Staubfang- und Prüfeinrichtung bekannt, die aus einem U-förmig gebogenen Rohr besteht, das nahezu vertikal angeordnet ist und an dessen unteren Ende sich ein Staubfangbehälter befindet. Sowohl die Eintrittsöffnung als auch Austrittsöffnung des U-förmigen Rohres befinden sich in einem Staubpartikel enthaltenen Gasstrom. Der Gasstrom wird in dem U-förmigen Rohr beruhigt und verwirbelt, wodurch sich infolge der Schwerkraftwirkung und der auf den Staub wirkenden Zentrifugalkraft an seinem unteren Ende der Staub im Staubfangbehälter absetzt. Eine Prüfeinrichtung prüft das Niveau des abgesetzten Staubes im Staubfangbehälter.

Da bei einer derartigen Einrichtung in erster Linie von dem Einfluss der Schwerkraft auf die Staubpartikel Gebrauch gemacht wird, ist damit nur die Feststellung von relativ grossen Staubpartikeln z.B. Kohlestaubpartikeln möglich. Kleine Staubpartikelchen die leicht sind, sind mit einer derartigen Einrichtung nur schwer feststellbar.

In der FR-A-2 200 961 wird eine Staubfang- und Prüfeinrichtung beschrieben, die aus einem Staubfangrohr besteht, das mit seiner Öffnung in einen Gasstrom hineinragt. An seinem unteren Ende befindet sich ein Staubfangbehälter, in dem sich der verwirbelte Staub absetzt, die Höhe des angesammelten Staubes wird mit Hilfe einer elektrooptischen Einrichtung abgetastet. Auch diese Einrichtung weist den Nachteil auf, dass sie relativ unempfindlich und damit nicht sehr genau ist.

Die der Erfindung zugrundeliegende Aufgabe besteht darin, eine Anordnung zur Feststellung von Partikeln in einer Gasströmung anzugeben, die eine hohe Empfindlichkeit aufweist.

Diese Aufgabe wird bei einer Anordnung der eingangs angegebenen Art gemäss den Merkmalen des Kennzeichens des Patentanspruches 1 gelöst.

Weiterbildungen der Erfindung ergeben sich aus den abhängigen Ansprüchen.

Die Gasströmung wird somit in einer gekrümmten Bahn durch den Hohlkörper geleitet. Die dabei auftretenden zentrifugalen Kräfte wirken auf eventuell vorhandene Partikel ein und leiten sie zum anderen Ende des Längsteiles des Hohlkörpers. Dort ist der Deckel angeordnet. In ihm ist eine Bohrung vorgesehen, an der die Lichtquelle und der Lichtdetektor angeordnet ist, die zusammen eine Lichtschranke bilden. Mit Hilfe der Lichtschranke wird der Niederschlag der Partikel an der Fläche der Bohrung überwacht.

Die erfindungsgemässe Anordnung weist eine grosse Empfindlichkeit gegenüber dem Vorhandensein von Partikeln in der Gasströmung auf. Durch einfaches Entfernen der Schraube im Deckel kann die Messeinrichtung gereinigt werden. Ein weiterer Vorteil liegt darin, dass die Anordnung eine kleine und preiswerte Bauform hat.

Anhand eines Ausführungsbeispiels, das in den Figuren dargestellt ist, wird die Erfindung weiter erläutert. Es zeigen:

Fig. 1 den Aufbau einer Anordnung zur Feststellung von Partikeln in einer Gasströmung,

Fig. 2 eine Vorderansicht einer Halterung für die Lichtschranke,

Fig. 3 eine Seitenansicht der Halterung der Figur 2,

Fig. 4 eine Auswerteschaltung.

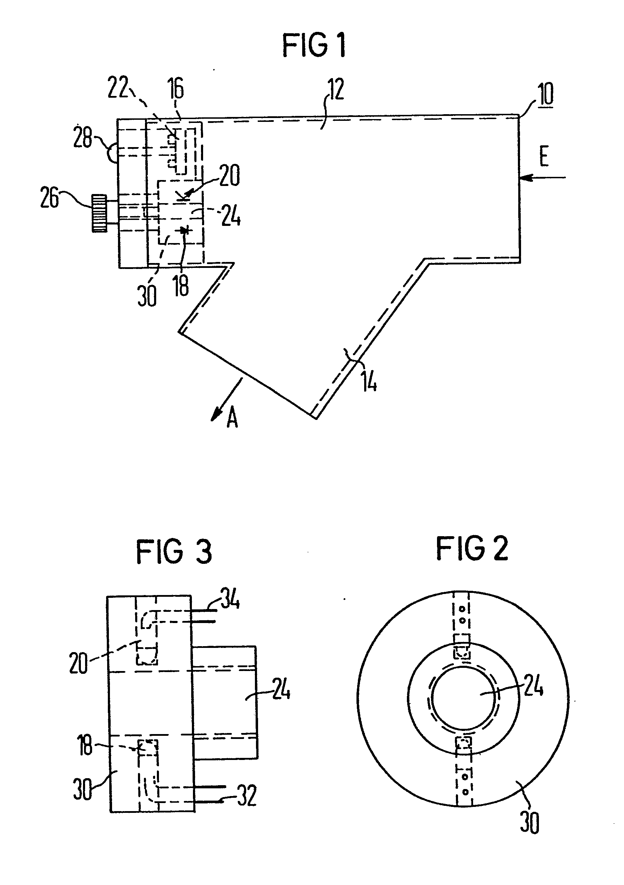

Die Anordnung weist entsprechend Figur 1 einen Hohlkörper 10 auf, der aus einem zylindrischen Rohr ausgebildeten Längsteil 12 und einem Seitenteil 14 besteht, der vom Längsteil 12 unter einem Winkel abzweigt. Die Gasströmung tritt an dem einen Ende E des Längsteiles 12 in den Hohlkörper 10 ein, wird durch den Hohlkörper in einer gekrümmten Bahn zum Seitenteil 14 geführt und tritt dort an der Austrittsstelle A aus.

Das andere Ende des Längsteiles 12 ist mit einem Deckel 16 verschlossen. In dem Deckel 16 ist eine Messeinrichtung angeordnet. Diese besteht aus einer Lichtquelle 18, aus einem Lichtdetektor 20 und aus einer Auswerteschaltung 22. Die Lichtquelle 18 und der Lichtdetektor 20 sind gegenüberliegend einer Bohrung 24 angeordnet. Die Bohrung 24 ist auf der Seite zum Hohlkörper 10 zu offen, auf der entgegengesetzten Seite dagegen mit einer Schraube 26 verschlossen. Die Lichtquelle 18 und der Lichtdetektor 20 bilden somit eine Lichtschranke, die den Inhalt der Bohrung 24 überprüft.

Wird eine Gasströmung mit Partikeln vom Eintritt E in einer gekrümmten Bahn zum Austritt A gelenkt, dann wirken die dabei auftretenden Zentrifugalkräfte auf die Partikel ein und leiten diese zum Deckel 16 und damit auch in die Bohrung 24. Dort legen sie sich an der Innenwandung an. Die Lichtschranke, bestehend aus der Lichtquelle 18 und dem Lichtdetektor 20 wertet die Belagdicke der Partikel an der Innenwandung der Bohrung 24 aus. Der Lichtdetektor 20 gibt ein der Belagdicke proportionales Signal ab, das der Auswerteschaltung 22 zugeführt wird. Wenn dieses Signal einen bestimmten Schwellwert überschreitet, wird von der Auswerteschaltung ein Warnsignal erzeugt. Dieses Warnsignal kann z. B. einer Leuchtdiode 28 zugeleitet werden, die ebenfalls im Deckel 16 angeordnet ist und die bei Auftreten des Warnsignals aufleuchtet.

Die Lichtquelle 18 und der Lichtdetektor 20 können in einer besonderen Halterung 30 angeordnet sein, die im Deckel 16 eingesetzt ist. Die Halterung 30 ist in den Figuren 2 und 3 im grösseren Massstab dargestellt. Die Halterung ist mit der Bohrung 24 versehen, in die auf der einen Seite die Schraube eingeschraubt werden kann. Die Bohrung 24 führt, wie bereits erläutert, zwischen der Lichtquelle 18 und dem Lichtdetektor 20 hindurch. Die Anschlussdrähte 32 und 34 der Lichtquelle 18 und des Lichtdetektors 20 führen von der Halterung 30 direkt zur Auswerteschaltung 22.

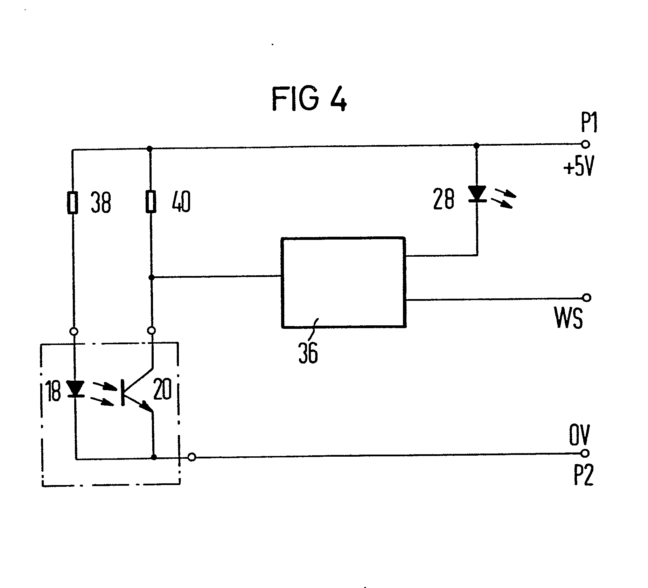

Eine mögliche Ausführungsform der Auswerteschaltung ist in Figur 4 dargestellt. Zwischen zwei Betriebspotentialanschlüssen P1 und P2 ist die Serienschaltung eines Widerstandes 38 mit der Lichtquelle 18, z. B. einer Leuchtdiode, angeordnet. Parallel dazu liegt eine Serienschaltung eines Widerstandes 40 und des Lichtdetektors 20, z. B. eines Fototransistors. Der Verbindungspunkt zwischen dem Widerstand 40 und dem Lichtdetektor 20 ist mit einer Schwellwertschaltung 36 bekannten Aufbaus verbunden. Die Schwellwertschaltung 36 überprüft das Ausgangssignal des Lichtdetektors 20 und gibt ein Warnsignal WS am Ausgang ab, wenn das Signal einen festgelegten Schwellwert überschreitet. Gleichzeitig kann die Leuchtdiode 28 angesteuert werden, die für diesen Fall aufleuchtet. Das Warnsignal WS am Ausgang kann dazu verwendet werden, um die zu überprüfende Vorrichtung abzuschalten. Mit Hilfe des Widerstandes 40 kann die Empfindlichkeit der Messeinrichtung festgelegt werden.

Die Messeinrichtung kann auf einfache Weise gereinigt werden. Dazu ist erforderlich, dass die Schraube 26 herausgeschraubt wird und die freiwerdende Bohrung 24 mit einer Reinigungsbürste gesäubert wird. Damit wird gleichzeitig eine Funktionsprüfung vorgenommen. Wenn nämlich die Reinigungsbürste durch die Lichtschranke hindurchgeht, muss die Leuchtdiode 28 aufleuchten und nach dem Herausnehmen der Bürste wieder verlöschen.

## Patentansprüche

1. Anordnung zur Feststellung von Partikeln in einer Gasströmung, mit einem von der Gasströmung durchsetzten zylindrischen Rohr (12), mit einer in dem Rohr (12) angeordneten Fläche, auf der sich Partikel niederschlagen und mit einer Messeinrichtung, bestehend aus einer Lichtquelle (18) zur Beleuchtung der Fläche, aus einem Lichtdetektor (20) zur Aufnahme des Licht das von den auf der Fläche niedergeschlagenen Partikeln beeinflusst wird, und aus einer an den Lichtdetektor (20) angeschlossenen Auswerteschaltung (22), dadurch gekennzeichnet, dass von dem zylindrischen Rohr (12) ein Seitenteil (14) abzweigt, dass das eine Ende des Rohrs (12) für den Eintritt (E) der Gasströmung offen ist, dass das Ende des Seitenteils (14) zum Austritt (A) der Gasströmung offen ist, und dass das andere Ende des Rohrs (12) mit einem Deckel (16) verschlossen ist, in dem die Fläche für den Niederschlag der Partikel und die Messeinrichtung angeordnet ist.

2. Anordnung nach Anspruch 1, dadurch gekennzeichnet, dass die Lichtquelle (18) und der Lichtdetektor (20) benachbart zu einer Bohrung (24) angeordnet sind, die durch den Deckel (16) hindurchgeht.

3. Anordnung nach Anspruch 2, dadurch gekennzeichnet, dass die Bohrung (24) an der Aussenseite des Deckels (16) mit einer Schraube (26) verschlossen ist.

4. Anordnung nach Anspruch 2 oder 3, dadurch gekennzeichnet, dass die Lichtquelle (18), der Lichtdetektor (20) und die Bohrung (24) in einer Halterung (30) angeordnet sind, die als Teil des Deckels (16) in diesen eingefügt ist.

5. Anordnung nach Anspruch 4, dadurch gekennzeichnet, dass benachbart zur Halterung (30) im Deckel (16) die Auswerteschaltung (22) angeordnet ist.

6. Anordnung nach einem der vorhergehenden Ansprüche, dadurch gekennzeichnet, dass eine Leuchtdiode (28) im Deckel (16) angeordnet ist, deren elektrische Anschlüsse mit der Auswerteschaltung (22) verbunden sind.

## Claims

1. An arrangement for detecting particles in a gas current, comprising a cylindrical pipe (12), through which the gas current flows, comprising a surface which is arranged in the pipe (12) and on which particles are deposited, and comprising a measuring device which comprises a light source (18) for illuminating the surface, of a light detector (20) for collecting the light which is influenced by the particles deposited on the surface, and which consists of an analysing circuit (22) connected to the light detector (20), characterised in that a lateral section (14) branches off from the cylindrical pipe (12), that the one end of the pipe (12) is open for the inlet (E) of the gas current, that the end of the lateral section (14) is open towards the outlet (A) of the gas current, and that the other end of the pipe (12) is sealed by means of a cover (16) in which the surface for the deposition of the particles and the measuring device are arranged.

2. An arrangement as claimed in claim 1, characterised in that the light source (18) and the light detector (20) are arranged so as to be adjacent a bore (24) which extends through the cover (16).

3. An arrangement as claimed in claim 2, characterised in that on the outside of the cover (16) the bore (24) is sealed by means of a screw (26).

4. An arrangement as claimed in claim 2 or 3, characterised in that the light source (18), the light detector (20) and the bore (24) are arranged in a holder (30) which is inserted into the cover (16) as part thereof.

5. An arrangement as claimed in claim 4, characterised in that the analysing circuit (22) is adjacent the holder (30) in the cover (16).

6. An arrangement as claimed in one of the preceding claims, characterised in that a fluorescent diode (28) whose electric terminals are connected to the analysing circuit (22), is arranged in the cover (16).

**Revendications**

1. Dispositif de détection de particules dans un courant gazeux, comprenant un tube (12) cylindrique parcouru par le courant gazeux, une surface qui est disposée dans le tube (12) et sur laquelle des particules se déposent, et un dispositif de mesure, constitué d'une source lumineuse (18), destinée à éclairer la surface d'un détecteur de lumière (20) destiné à recevoir la lumière influencée par les particules déposées sur la surface, et d'un circuit d'exploitation (22) connecté au détecteur de lumière (20), caractérisé en ce qu'une partie latérale (14) fait un certain angle avec le tube (12) cylindrique, en ce qu'une extrémité du tube (12) est ouverte pour l'entrée (E) du courant gazeux, en ce que l'extrémité (14) de la partie latérale (14) est ouverte pour la sortie (A) du courant gazeux, et en ce que l'autre extrémité du tube (12) est fermée par un couvercle (16) dans lequel sont disposés la surface pour le dépôt des particules et le dispositif de mesure.

2. Dispositif suivant la revendication 1, caractérisé en ce que la source lumineuse (18) et le détecteur de lumière (20) sont disposés au voisinage d'un perçage (24) qui traverse le couvercle (16).

3. Dispositif suivant la revendication 2, caractérisé en ce que le perçage (24) est fermé sur la partie extérieure de couvercle (16) par une vis (26).

4. Dispositif suivant la revendication 2 ou 3, caractérisé en ce que la source lumineuse (18), le détecteur de lumière (20) et le perçage (24) sont disposés dans une pièce de fixation (30) qui, en tant que partie du couvercle (16), est introduite dans celui-ci.

5. Dispositif suivant la revendication 4, caractérisé en ce que le circuit d'exploitation (22) est disposé au voisinage de la pièce de fixation (30) dans le couvercle (16).

6. Dispositif suivant l'une des revendications précédentes, caractérisé en ce qu'une diode émettrice de lumière (28), dont les bornes électriques sont reliées au circuit d'exploitation (22), est disposée dans le couvercle (16).

0 045 878

## FIG 1

## FIG 3

## FIG 2

# FIG 4

P1
+5V

38

40

28

36

WS

18 20

0V
P2